# EUROPEAN PATENT APPLICATION

(11) **EP 2 101 276 A1**
(43) Date of publication of application: **16.09.2009**
(21) Application number: 09250669.0
(22) Date of filing: 10.03.2009
(51) Int. Cl.: G06F 21/00

(54) **Data access and user identity verification**

(30) Priority: 10.03.2008 AU 2008901150
(71) Applicant: Aceinc Pty. Limited, West Perth, W.A. 6005 (AU)
(72) Inventor: Cohen, Thomas Andrew, West Perth, W.A. 6005 (AU)
(74) Representative: Coles, Graham Frederick

(57) **Abstract**

A user access interface for a processor device comprises a control program (200) adapted to receive a first access data indicative of a first access key (201), so that upon receiving the first access data the control program (200) causes the database to be interrogated (202), thereby obtaining (203) a first verification data that is indicative of access verification for one or more accessible services associated with the first access data, the physical access key and a respective registered first user (204).

## Description

### Field of the Invention

The present technology relates to personal access to a service on a processor device, electronically stored data, computer-mediated content or web-based services, in particular, personal access that is controlled using personalised identification.

The invention has been developed primarily for use in facilitating personal access to electronic data using a computer server comprising a database for storing data indicative of access information and will be described hereinafter with reference to this application. However, it will be appreciated that the invention is not limited to this particular field of use.

### Background of the Invention

Any discussion of the prior art throughout the specification should in no way be considered as an admission that such prior art is widely known or forms part of the common general knowledge in the field.

The present application incorporates the entirety of the Applicant's Australian provisional application AU2007902445.

A conventional method of authenticating a user or verifying a user's identity includes prompting the user for a log-in name and a password. This method is susceptible to identity theft attacks, such as online data stealing, key logging or other forms of clandestine data copying.

In some cases, a user may use a machine over a number of sessions. He or she may need to lock the machine to protect his or her work from unauthorised viewing or editing. This locking may be done using a username and password combination. The combination may be subject to clandestine data stealing.

In some cases a user may wish to limit access to data to a known set of users, or to users whose identities have been verified.

In some scenarios, for example in a publishing house or in an office where sensitive data is handled, it may be possible for a person to view or edit a document without authorisation, or to forge a document. Similarly, online communication between two or more users via, for example, e-mail or instant messaging, may be intercepted in transit or read by third parties before or after reception. It is desirable for the occurrence of these activities to be lessened.

### Objects of the Invention

It is an object of the present invention to overcome or to ameliorate at least one of the disadvantages of the prior art, or to provide a useful alternative.

It is an object of the present technology in its preferred form to reduce the vulnerability of a user authentication method to identity theft.

It is an object of the present technology in its preferred form to provide a centralized user identity verification system that can be utilized by providers of various services.

It is an object of the present technology in its preferred form to allow a user to access data not generally available to other members of the public.

It is another object of the present technology in its preferred form to provide data encryption and data access control.

### Summary of the Invention

The invention provides a user access interface for a processor device that is adapted to receive access data indicative of a respective physical access-key. The processor device is coupleable to a database having one or more records indicative of registered users, associated access keys and associated verification data. The interface comprises a control program adapted to receive a first access data indicative of a first access key, so that upon receiving the first access data the control program causes the database to be interrogated, thereby obtaining a first verification data. The first verification data being indicative of access verification for one or more accessible services associated with the first access data, the physical access key and a respective registered first user, wherein the control program utilizes the first verification data to enable administration of a user's access to the one or more services.

According to an aspect of the invention there is provided an access control system comprising at least an access reader such as an RFID reader for managing communication between software running on a user machine and a uniquely identifiable RFID tag or USB connection for enabling communication between software running on a user machine and a USB storage device.

The reader is connected to a computer that is in communication with a system server. The server assigns an identification key to a user account accessed by the access key,

According to an alternative aspect of the invention there is provided an access control system comprising at least an access reader. The reader is connected to a computer that is in communication with a system server. The server comprises an access database and transmits unique encryption keys to the reader. The reader encodes the key to an ID key (such as a RFID tag or USB storage device).

According to an aspect of the invention there is also provided a user identity verification system comprising a server that is in communication with one or more user machines. Each user machine is equipped with a reader for reading a user's ID key. The server comprises a user database, each entry of the database recording information of a user's account settings and assigned key(s). The entry may further contain a list of other users to whom the first user wishes to grant (or has granted) the right to access data encrypted by the first user.

According to another aspect of the invention there is also provided a user identity verification system comprising a server that is in communication with one or more user machines. Each user machine is equipped with a reader for reading a user's ID key. The server comprises a user database, each entry of the database recording information of a user's account settings and assigned key(s). The entry may further contain a list of third party web sites for which the user wishes his or her ID to be validated.

### Brief Description of the Drawing Figures

Preferred embodiments of the invention will now be described, by way of example only, with reference to the accompanying drawings in which:
- FIG. 1A: is a schematic diagram of an embodiment of an access control system;
- FIG. 1B: is a schematic diagram of an embodiment of an access control system;
- FIG. 1C: is a schematic diagram of an embodiment of an access control system;
- FIG. 1D: is a schematic diagram of an embodiment of an access control system;
- FIG. 1E: is a schematic diagram of an embodiment of an access control system, showing data management components for the master and copy access keys;
- FIG. 2A: is a flowchart depicting a method for access control;
- FIG. 2B: is a flowchart depicting a computer locking process using the access control system;
- FIG. 2C: is a flowchart depicting a computer unlocking process;
- FIG. 3A: is a flowchart depicting an access key designation process;
- FIG. 3B: is a flowchart depicting a content environment launching process;
- FIG. 3C: is a flowchart depicting a data accessing process;
- FIG. 4A: is a flowchart depicting a master key acquisition process;
- FIG. 4B: is a flowchart depicting a process for creating a copy access key;
- FIG. 4C: is a flowchart depicting a copy access key validation process;
- FIG. 5: is a schematic diagram depicting an access software;
- FIG. 6A: is a flowchart depicting a data encryption process;

- FIG. 6B: is a flowchart depicting a data decryption process;
- FIG. 7: is a schematic diagram depicting a user confirmation system;
- FIG. 8A: is a flowchart depicting a validated online ID' status process;
- FIG. 8B: is a flowchart depicting a user registration process for the user confirmation system;
- FIG. 8C: is a flowchart depicting a third party service registration process;
- FIG. 8D: is a flowchart depicting a permanent code generation process;
- FIG. 8E: is a flowchart depicting a process by which a third party validates a customer using the customer's permanent code;
- FIG. 9A: is a flowchart depicting access using encryption and/or decryption of input data; and
- FIG. 9B: is a flowchart depicting an account file copying process.

### Best Mode and Other Embodiments

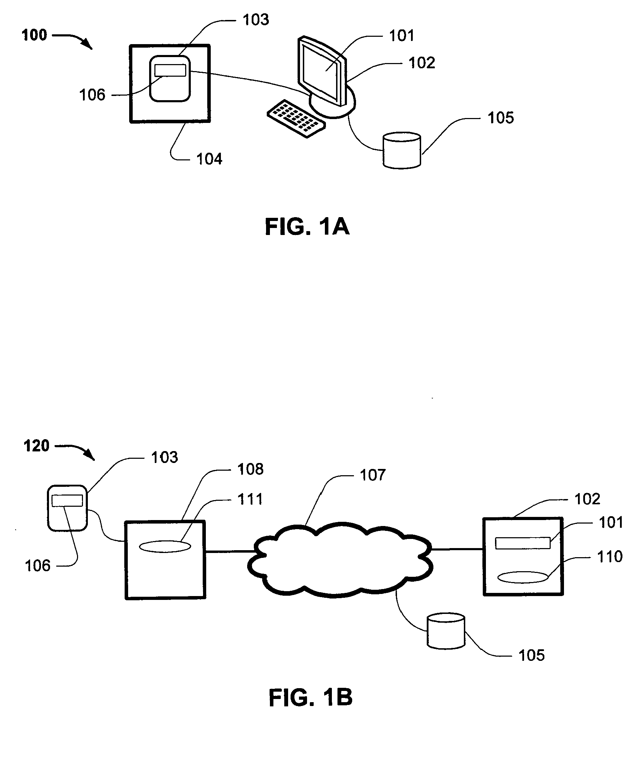

Referring to FIG. 1A, a user access interface 101 for a processor device 102. The processor device being adapted to receive identification data indicative of a respective physical access key or ID key 103 (or equivalently an access tag), typically through use of an interface port 104. By way of example, the access key or ID key can be in the form of a RFID tag or USB storage device. The processor device is also coupleable to database 105 having one or more records indicative of registered users, associated access keys, associated verification data and lists of users to whom, and sites to which the user has granted access rights.

The interface 101 comprises a control program adapted to receive a first access data 106 indicative of a first access key or ID key 103, such that upon receiving the first access data the control program causes the database to be interrogated. Through interrogation of the database a first verification data is obtained. This first verification data is indicative of access verification for one or more accessible services associated with the first access data, the physical access key and a respective registered first user. The control program can utilize the first verification data to enable administration of a user's access to the one or more services.

In an embodiment, the database can be accessible from an online management system, via which users may change or modify their details or preferences as stored in the database. A web interface, database, and the access interface may be hosted on the same server or on separate servers.

For accessing the server and utilizing an access interface, a user places a valid access key or ID key onto an access reader in the prescribed fashion (or inserts a USB storage device into a USB port). Software associated with the reader can establish a connection with a web script. The web script is preferably hosted by a system server but may be hosted by a separate server. The data from the ID key is transferred from the reader to the system server via the web script and is recorded to and/or compared with the database. Preferably, the communication between the system server and the user machine is encrypted.

To modify preferences, or other details stored in the database, a user can access an online account management system, by validating his or her ID key on an access reader. In some examples, this action opens the online account management system by way of a system server redirection. The management system preferably further prompts the user for a user name and password before the user can change his or her account settings.

According to an embodiment, a client application is executed on a local client machine (for example the processor device 101), which communicates with a server via a secure data communication. The server enables the client device and client application to access the account database 105.

Initially, by way of example only, each user registers to use services provided. The services can include user validation (for example identification and/or authentication) and cryptographic services. This registration establishes a record within the database containing details relevant to a user account. The user account can be established by providing a user name, for example in the form of a valid email address, and a password. To further verify the user, a confirmation email with an account activation link can be sent to the provided e-mail address. In this example, to activate the account the user must use the web activation link provided in the email. This substantially reduces the possibility of someone creating an account using someone else's email address. The IP address of the client computer (or gateway device) used for registration (or any subsequent communication with the server) may also be stored in the database and associated with the user's account record, for further verification of the user in subsequent admittance by the client application.

An ID key, for example in the form of a USB storage device, can be registered by the user. Data indicative of the ID key is recorded in the database and associated with the relevant user's record. Preferably, the client application can automatically recognise the presentation/removal of an ID key to/from the client computer.

A registered ID key associated with a user account can be reset or removed. Resetting or removal of an ID key may require answering one or more additional validation questions. Preferably, an email can be sent to the registered user with instructions on how to finish removing or resetting an ID key. More preferable, the ID key is not reset if the emailed instructions are ignored or the instructions not completed.

To provide additional security, the client application may require additional authentication in the form of an account name and password when initially registering or activating the ID key for use. The client application can authenticate the ID key, and/or account name and password, when validating a user. The user preferably remains validated while the validated ID key remains presented to, or is accessible by, the client application.

Once registered, a user can apply an ID key to a client computer, which preferably activates the client application. The client application can further validate the user by requesting an associated account name and password, which is validated by interrogating the database. The ID key preferably remains accessible to the client computer until verification is no longer required. Removal of the ID key preferably performs a logout operation from the system and disables further verification of the user (until the ID key is reapplied).

The client application can assist verification of a user on third party services. To access the third party service, the client application can retrieve a respective "third party permanent codes" from the database. This third party code allows a registered user's identity to be verified by administrators or providers of third party service. A "verified ID" status can be obtained, which means the third party can confirm a customer's identity via the identity verification system described herein.

In an embodiment, a data encryption/decryption service can also be provided. Each user account is provided with an associated, unique encryption key and decryption key. Using the client application, a validated user can encrypt data, including data files in any format and text in e-mail, websites, blogs, forums, chat and instant messaging application. To encrypt data, the client application retrieves the locally validated user's encryption key and applies an encryption algorithm to the data. The encrypted data is presented to the user as encrypted data. Preferably, encrypted data is also cached in system memory for enabling copying to other applications. The encrypted data can be used in an e-mail, websites, blogs, forums, chat, instant messaging applications and secure storage on the local machine. By way of example only, the text 'test' can be encrypted as:

[void:39_b+tnDlZMSLVdVruuQVlGrQ==:void].

In this example, it will be appreciated that an identifier ('void') has been pre-pended and appended to the data to assist with identifying the encrypted data. A user identifier, in this example '39', is also presented in an unencrypted form within the data, for identifying the user whose encryption key encrypted the data.

A registered user can grant (and revoke) decryption rights to any other registered user. A verified user can add a 'friend' user to their account. This authorises the 'friend' user to access the relevant decryption key, for decrypting the encrypted data. A list of authorised 'friend' users are associated with a users account and maintained in the database. If the nominated 'friend' does not have an account, an email can be sent to them advising on how to register.

To decrypt the data, the client application extracts the user identifier from the encrypted data, thereby identifying the user who encrypted the data. The database is interrogated to identify if the user account indicated by the user identifier has the current validated user registered as a 'friend'. If the current validated user is registered by the encrypting user as a 'friend', a respective decryption key is retrieved from the database, and provided to the client application. Preferably, the decryption key is retrieved at the commencement of each decryption process and is not stored between decryption processes.

It will be appreciated that this system and method, enables data to be encrypted by one user and decrypted by one or more 'friend' users. The encrypting user can add (or remove) 'friend' users at any time, thereby enabling (or denying) subsequent access to encrypted data. It will be further appreciated that to enable two-way encryption and decryption, each registered user of an access group must identify all other registered users in the group as a 'friend' user. By using an external database, a user can configure their account to enable the sharing of encrypted data among a plurality of users. Rather than distributing a decryption key to all members of a group, which can not be recalled, the decryption key is provided at the time of decryption and only to current 'friend' users associated with the user who encrypted the data.

A user record can contain data associated with validation of a user. By way of example only, a user record can contain any one or more of the following:
- Account name (e.g. valid email address).
- Password.
- ID key identification data.
- IP address of client computer (or gateway) used for registration.
- Friend' users.
- Encryption key.
- Decryption key.
- Additional validation data.
- Third party codes for accessing respective third party services.

A registered user can access and update their account record. By way of example, a server can provide a web interface to the database, for enabling the registered user to view and update the data stored in the user account database. By using an external database, a user can configure their account (or have access to data) at any client computer coupled to the database. The use of a physical ID key provides additional security or authenticity to the validation process.

FIG 1B shown and alternative embodiment 120, whereby the processor device 102 is a server connected via an electronic communication channel 107 to a client computer (or device) 108. In this example embodiment the control program to provide the interface 104 is distributed, and includes control programs 110 and 111 operating on the server and client respectively. It will be appreciated that the control program may also be executed by either the client or server alone.

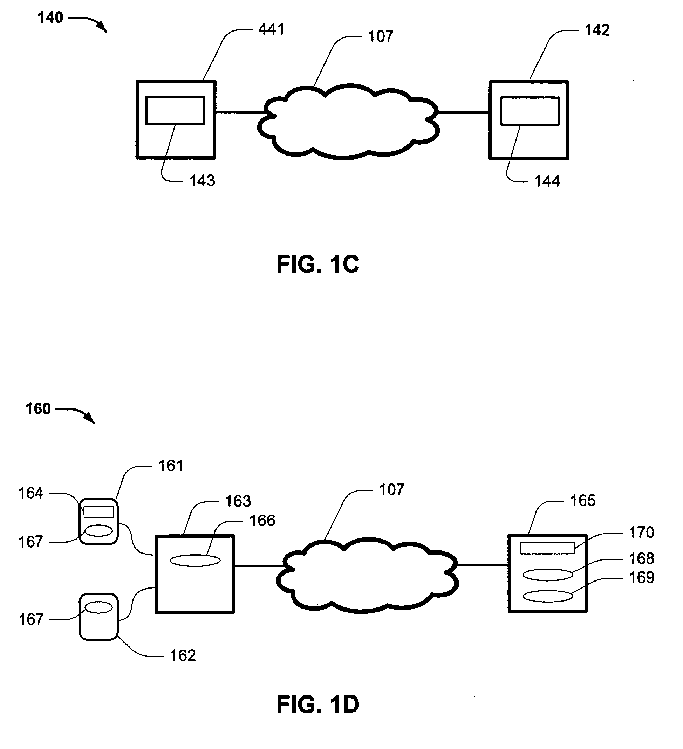

As shown in FIG 1C, an alternative embodiment can include a plurality of client devices 141 and 142, each having a respective interface 143 and 144. In this example, access to one or more services can be administrated for a plurality of users using the respective client devices.

By way of example only, access to the one or more services can include access to electronic data or application, access to web services such as instant messaging or blogs, access to encryption and decryption services for communicating with others, and/or access to services for verifying a user's identity online.

### Device Access Control

Device Access Control can, by way of example only, include
➢ controlling access to a processor device including associated input-output interfaces;
➢ controlling access to data stored on a processor device;
➢ controlling access to software application provided by a processor device; and/or
➢ controlling encryption/decryption services provided by a processor device.

As shown in FIG. 1D, by way of example only, a data access control system 160 comprises a first access key (or access tag) reader 161 and a second access key reader 162. In the current embodiment, the readers are radio frequency identification (RFID) readers. The first and second access readers are connected to a machine (or processor device) 163 through which a user may access data. The connection may be made through a universal serial bus (USB) connector. The system 160 also comprises one or more uniquely identified access keys 164 that are readable by the access readers. In the current embodiment, the access keys 164 are RFID tags. The system 160 further comprises software for controlling the system. The software 166 may be loaded on the machine to which the readers are connected. Alternatively, the access software 167 may be located on the readers.

In some examples, the system 160 also comprises a server 165 with which the machine 163 communicates. The server 165 comprises at least an access key database 168 and a registered user database 169. The entries in the access key database 168 may contain information regarding each access key, such as the access key's unique identifier (ID) or what the access key is used to access (i.e. the key's designation). The entries in the registered user database 19 comprise information such as the access key profiles, and registration and account settings for each registered user. In some embodiments, the server 165 supports a user interface 170. This interface can enable a registered user to update the content of the registered user database 169.

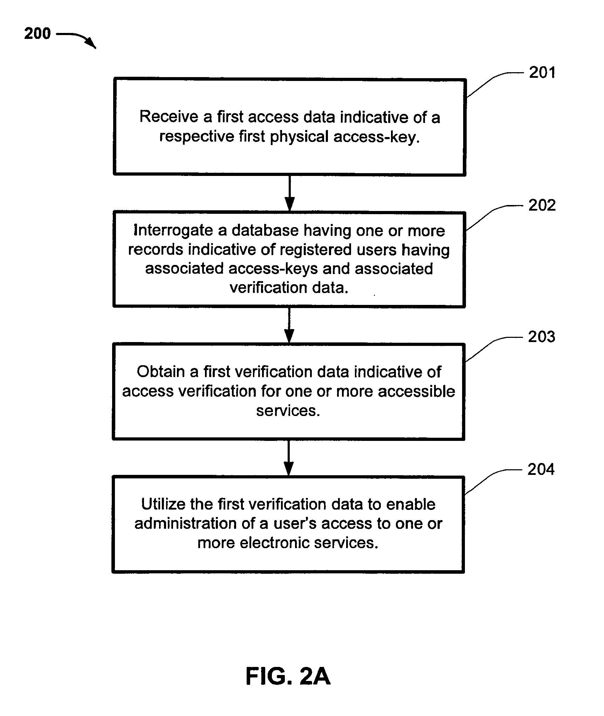

As shown in FIG. 2A, a method for controlling access to one or more electronic services, can comprise:
(a) receiving a first access data indicative of a respective first physical access-key; 201
(b) interrogating a database having one or more records indicative of registered users having associated access keys and associated verification data; 202
(c) obtaining a first verification data indicative of access verification for one or more accessible services associated with the first access data, the physical access key and a respective first registered user; 203
(d) utilizing the first verification data to enable administration of a user's access to the one or more electronic services. 204

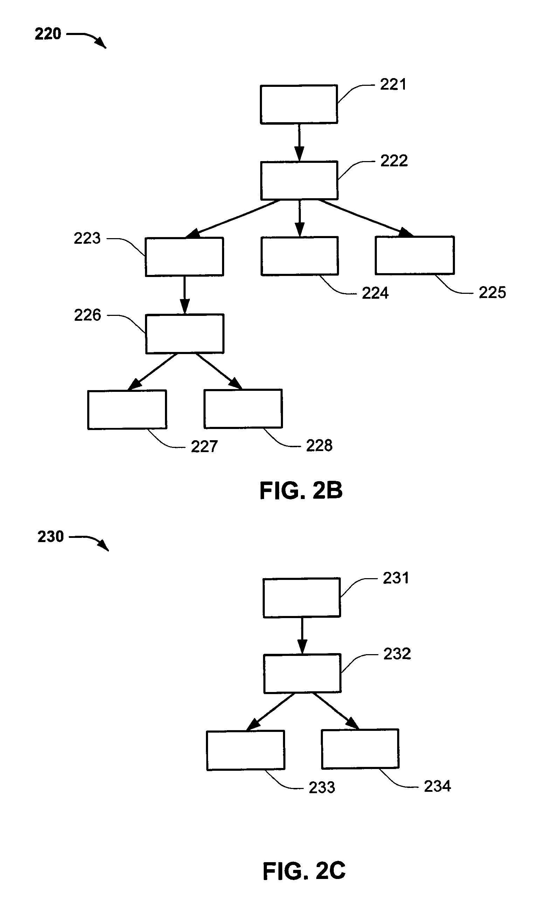

As shown in FIG. 2B, in an embodiment the software may utilize the key to lock or unlock a machine equipped with the access readers 220. Each user is assigned or may designate at least one access key (or access tag) 221. Placing an access key on the first access reader causes the first access reader to read the access key's ID 222 (for example an RFID), thereby obtaining respective access data. A misalignment between the access key and the access reader may cause the access software to return an error message 224, or do nothing 225. A successful reading of the access key 223 causes the software to lock input to the machine and hide the original screen content 226. To hide the original content, the access software launches a full screen display such as an image, a slideshow, an animation, or a video as previously selected by the user. An audio output may also accompany the display. This audio-visual display may be locally sourced from the machine 227. Alternatively, in embodiments where the machine is connected to a system server, the display may be sourced from a server 228.

As shown in FIG 2C, to unlock a locked machine 230, a user places a lock access key (or access tag) on the machine's second access reader 231. The second access reader reads the access key's ID to detect whether it is the same as the key used to lock the machine 232. The machine is unlocked if there is a match 233. The machine remains locked if there is no match 234.

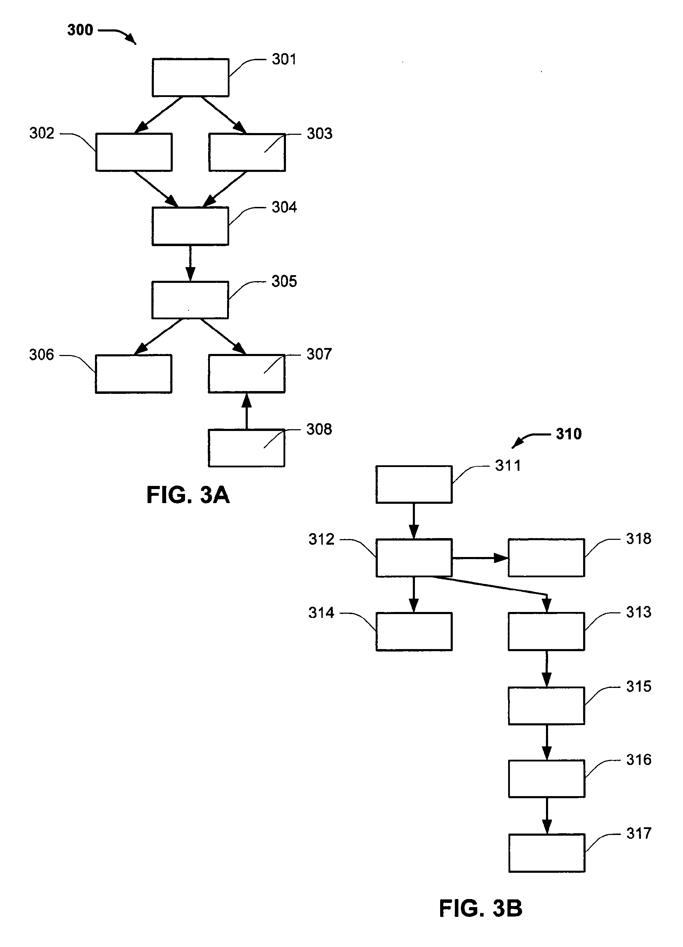

Referring to FIG. 3A, an access key (or access tag) can alternatively be designated as a content environment launching access key, or as a data access key 300. To designate the access key 300, a user accesses the user interface supported by a server 301. On the user interface, the user subscribes to a content environment 302 or to a certain online content 303. After a successful subscription, the user receives an access key 304. The interface prompts the user to place an access key on the first or the second access reader 305. The first or second access reader writes an access key onto the user's access key, and the key now becomes a designated launch key for the chosen content environment 306 or online content 307. In some embodiments, an access key may be designated as an online data access key before the key is issued to a user 308. This prior designation 308 may be done by encoding additional data, such as a key that points directly or indirectly to the address of a website containing the online content, in the access key.

Referring to FIG. 3B, to launch a chosen content environment 310, the user places an access key designated for launching a content environment on the first access reader 311. The placement causes a full screen hypertext mark-up language (HTML) based layout to be launched 312. The layout displays the latest content environment that the user subscribed to with the access key placed on the access reader. The content environment comprises dynamically updated contents in a range of active and/or interactive screen elements. Any display template or embedded applications within the environment are stored locally 313. In the event that the same key was previously used to subscribe to another environment, that other content environment will be removed from the machine 314. The removal occurs at the time a new subscription is made. The access software also communicates with an online source to receive any updates for the content environment 315. The updates received at the launch of the content environment are cached 316. The templates and applications of the environment are updated in the background while the user works 317. After the launch 312, a placement of the designated key on the second access reader will cause the launch session to close 318.

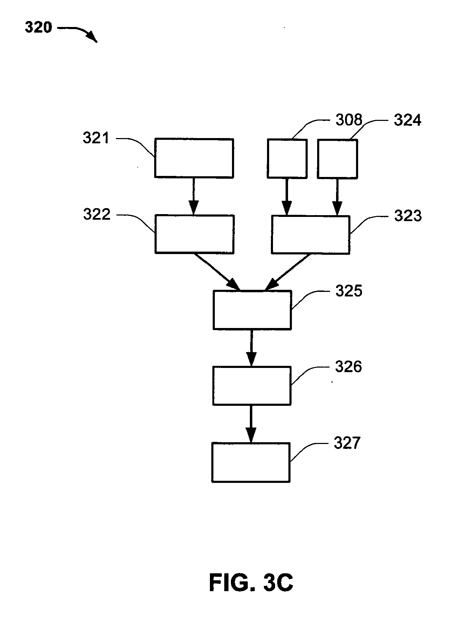

Referring to FIG 3C, to launch a chosen online content 320, the user places an access key that has been designated as an online data access key on the first access reader 321. This placement causes a web browser or another suitable application to be launched, the browser or application displaying a content specifically indicated by the key 322. In some embodiments, the data access key further contains additional data 323. This additional data may be written to the key prior to an issuance of the key to the user 308, or it may be written from a user interface associated with the server 324. This additional data is read by the first access reader and then transferred by the reader to the server 325. The server compares the additional data to its access database 326. The server redirects the user's browser to a new data source if the database entry matching the additional data contains a re-direction address for the new data source 327.

In the above embodiments, the user does not need to be registered with the access system. The system recognizes the users' keys. Each key can only be used for one function at a time. Some examples of the possible function include locking and unlocking a computer terminal, launching and closing a content environment, and launching and closing online data. In some other embodiments, the access system requires user registration.

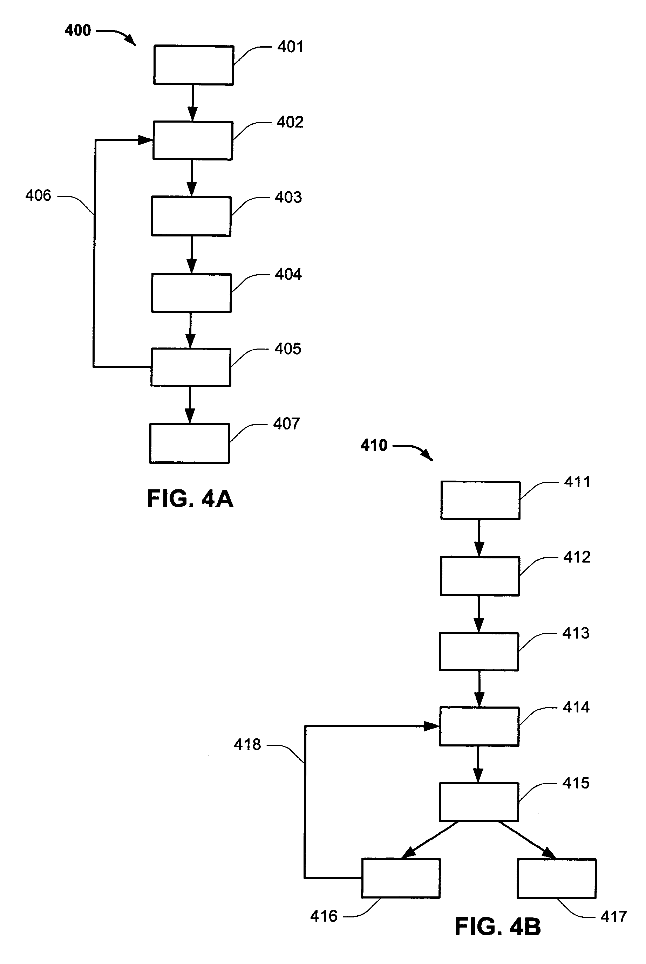

As shown in FIG. 4A, the access system may provide encryption and decryption services for a group of users. To access this service, a user needs to acquire an encryption/decryption key 400. From a machine equipped with a first and a second access reader, a first user (or "master user") accesses the system server and creates a password protected account on the server 401. After the account is established 401, the first user can request the issue by the server of a unique encryption/decryption key 402. The server allocates a unique key 403 to the first user's account. The first is prompted to place an access key on the second reader 404. The second reader writes the unique key to the first user's access key, and this key now becomes a "master key" 405. The same first user may repeat this same process using other access keys, to create more "master keys" 406. Each master key will have its own unique key. Where multiple master keys are created, the first user may be required to uniquely name each master key 407 so that the master keys can be managed separately in the user's account on the server.

As shown in FIG. 4B, the first user may now manage each master key 410. The management includes setting the encryption/decryption privileges for each member of the user group. The user group will share the unique key of that master key. To access his or her account, the first (or "master") user places the master key on the first access reader 411. This establishes a connection between the server and the machine that the first user is currently occupying 412. The first user clicks on a link in the server's application and enters his or her login name and password as prompted 413. The first user can now launch a key copying application provided by the server 414. Within the application, the user may make a copy of the master key, by placing the master key on the first access reader, and placing a destination key on the second access reader 415. The unique key of the master key is then copied to the destination key 416. The first user may further assign a name to the copy key (i.e. the "destination key" or "target key"). Also, the first user can designate the read and write privilege for each copy key 417.

For example, a "read" copy key can only be used to decrypt data, whereas a "read and write" copy key can both encrypt and decrypt data. In this example, each copy key that can encrypt data further has a unique fingerprint. The fingerprint, such as a digital watermark, is discernible upon decryption using the master key. The fingerprint helps identify the user who has performed the encryption. Multiple copy keys can be produced and distributed to various users, and these users form a user group 88. Different copy keys that are used by the same user group may be assigned with different read and right privileges.

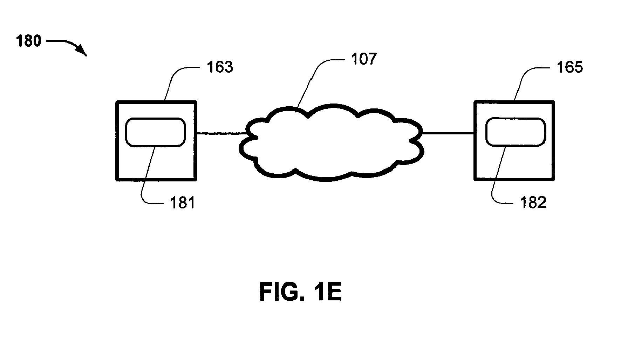

Referring to FIG. 1E, the copy key's identifier, name, or privilege status is recorded in the master user's online database on the server. The information contained in the database 182 may be modified by the master user. For example, the master user, after logging in to his or her user account on the server, may delete a copy key from the online database 182, or change the privilege level associated with the copy key.

In some examples, the information that is recorded into the online database 182 may also be stored in a local database 181 on the master user's computer. In these examples, the local and online databases 181, 182 may be synchronised, so to contain the same information. The synchronisation may occur regularly, or on demand.

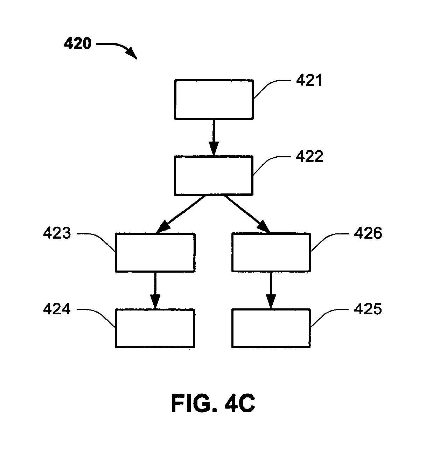

As shown in FIG. 4C, the access system verifies the validity of a copy key 420. At a first use of the copy key 421 (i.e. the first time that the copy key is used on an access reader to encrypt or decrypt data), the reader or the machine to which the reader is connected queries the online database. The server checks the database entry for the master key associated with that copy key, and determines whether there has been a change to the status of the copy key 422. A change in status may be a deletion of the copy key, or a change in the designation of the read/write privilege. The same querying may also be performed automatically at regular intervals.

The system, upon detecting a change or update in the copy key's status 423, generates a message to advise the copy key's user of the change 424. In one example, this message is an on-screen message. The copy key's user continues using the copy key in the same manner 425 if no changes were detected 426.

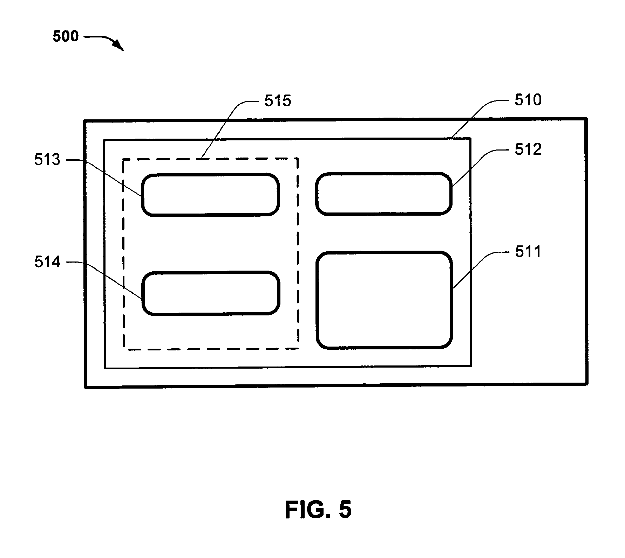

Referring to FIG. 5, the access software 500 comprises a user interface 510 that facilitates the user to encrypt or decrypt data using a master key or copy key (subject to read/write restrictions in the online database, for example as represented by 182 of FIG. 1E). The user interface 510 (for example as also represented by 170 of FIG. 1D) comprises a target area 511. The target area 511 allows a "drag-and-drop" operation. A user can "drag" the icon of a file and "drop" it on the target area 511 to encrypt the file. Alternatively, a user can drag highlighted text and drop the text into the target area 511 for encryption. The user interface 510 comprises a button 512 for launching a text editor. The interface 510 also comprises an "encryption" button 513 and a "decryption" button 514.

The target area 511, encryption button 513, or decryption button 514 may be provided in a plug-in 515. The plug-in 515 may be available for selected applications, such as the Microsoft Internet Explorer or Firefox. The plug-in 515 allows a user to encrypt any text in an active type-in field on the currently displayed page, by highlighting the text and dragging it to the toolbar target. In some examples, the encryption process only starts after the encryption button 513 is pressed. In other examples, encryption of the data dragged to the target area 511 is automatic. The encrypted text may be pasted automatically to replace the highlighted, unencrypted text. For example, the type-in field could be a text field in a BLOG editor or a web-based email interface. In this embodiment, the encryption process is reversible. A user can click on the decryption button after having performed an encryption, if he or she wishes to continue working on the encrypted content.

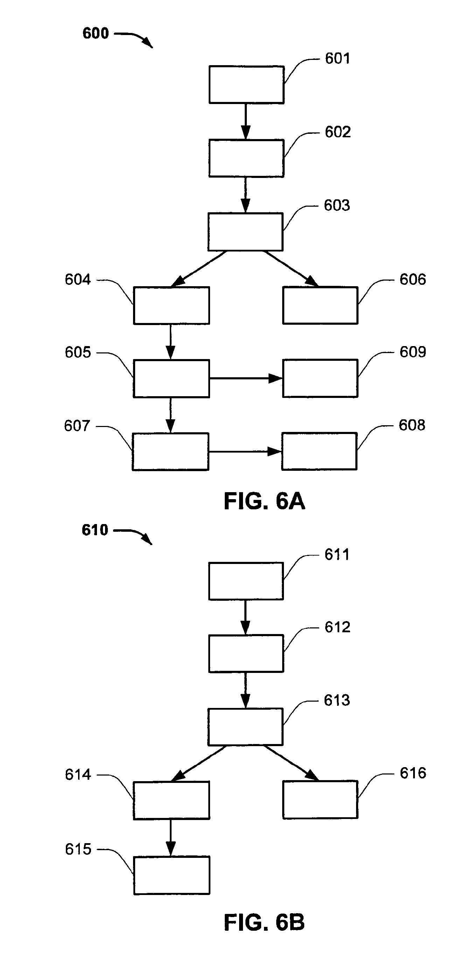

Referring to FIG. 6B, to encrypt data 600, a user places a key on the first access reader 601. The user also provides the data to be encrypted (i.e. the encryption input) 602. This may be done by dragging a file icon or highlighted text and dropping it in the target area. The process proceeds if the key is an appropriate key that has the privilege for encryption 604. The appropriate key is left on the reader until encryption is finished 605. If the access key does not have the appropriate privileges, the software generates a message to advise the user that the key is read-only 606.

An encrypted file is output to a system directory. Also, in this example, a desktop icon representing the encrypted file appears 608. Encrypted text may be pasted automatically directly back into the application from which the highlighted text was dragged (replacing the unencrypted text). In some examples, encrypted text may be output to a text display window. The encrypted text may be concurrently placed on the Windows Clipboard ready for manual pasting into a suitable application.

As shown in FIG. 6B, to decrypt data 610, a user places a key on the first access reader 611, and drags the file or highlighted data to be decrypted into the target area 612. A decrypted file is output to a system directory. Decrypted text is output to a text display window (and concurrently placed on the Windows Clipboard ready for manual pasting into a suitable application). In the case of an application that supports the plug-in, a user clicks on the decryption button and any encrypted files or text displayed in the application window (such as a web page in a browser) will be decrypted and displayed automatically in the application window. The decryption process completes only if the key is left on the reader for the entire duration of the process 614. If the user removes the key while the decrypted content is still displayed in the application window, the content reverts to its encrypted format 615. In the case that the decryption key is not compatible with the encryption key used for the data, the output will be unintelligible 616.

### User Identity Verification System

The data access system can also be modified and used for the purpose of user identity verification. The aforementioned access keys (or equivalently access tags) are used to identify registered users. The modified system is referred to as the user identity verification system.

An online ID validation service is disclosed for use with web sites. The service can provide the web host, and in particular the web presentation software associate with a web site, with data that enables the web side to indicate (typically for the benefit of other users) that a particular user of the site is more than likely to be who he/she claims to be (rather than an identity thief or spoofer). Use of this system can also include the same user accounts and ID/access keys for accessing an encryption/decryption system as discussed below. This system can provide one or more of the following beneficial features:
➢ A web site can display a 'validated online ID' status.
➢ A web site can obtain access, via a secure link, to an account on a system server.
➢ New user registration on the affiliate site (or updates settings), can be offered a 'validated online ID' status. A user selecting this option can, typically while logged into the 'validated online ID' status system, register with an ID access key present at a client PC.
➢ Subsequent visits to a web site, the web site can request confirmation from 'validated online ID' system that the correct ID access key has been detected, and that the detection is from the same IP address as that IP address used to log into the web site.
➢ A web site can take action to indicate a 'validated online ID' user, eg. a small image adjacent to a user's name in a chat/IM window or a post in a wiki/comments system.
➢ A web site can take predetermined action when a user attempts to login without a 'validated online ID' confirmation.
➢ A 'validated online ID' user's account can contain a record of all sites for which that user has a registered 'validated online ID' status.

In an embodiment, the interface for a processor device as described herein, the processor device being adapted to receive access data indicative of a respective physical access-key, one or more services are made available by a web-server via a web interface. In this embodiment, a client device coupled to the web-server provides the user's access, and the control program is further adapted to receive a first server data indicative of the web-server and/or respective web interface. The control program causes the database to be interrogated and utilizes the first server data to obtain the first verification data. The control program is further adapted to provide the first verification data. The web-server, upon processing the first verification data, can verify the first user and enable verified access to the one or more services. A second user accessing a web interface made available by the web-server receives a verification indicator, indicative of the first verification data, to thereby verify the first user had accessed the one or more services. By way of example, the web-server indicates a verified access by the first user using a small image adjacent data provided by the first user through accessing the one or more services.

The access data can be transmitted to the control program over an encrypted data communication link established between the client device and the processor device.

By way of example only, the web-server can make the web interface available using an internet protocol and the client device has a client IP address. In this example the web-server can submit the client IP address to the control program. The control program can confirm that the physical access-key had been registered for use at the provided client IP address, and provide the first verification data corresponding to the first access data and the client IP address.

In another embodiment, the web-server can makes the web interface available using an internet protocol and the client device has a client IP address. The web-server receives a request for verification the web interface submits the client IP address to control program. The control program matches the client IP address against the database and confirms the physical access-key is registered to communicate at the client IP address. Upon confirmation, the control program obtains the first verification data that corresponds to this IP address. By accessing cookie information associated with the first verification data, the control program identifies a permanent code, and transmits the identified permanent code to the web-server. In this example the web-server matches the permanent code against its own records to verify the identity of the first user.

It will be appreciated that the database contains a record for a registered user associated with each of a plurality of web sites and associated with a respective one or more physical access-key authorized to enable valid access.

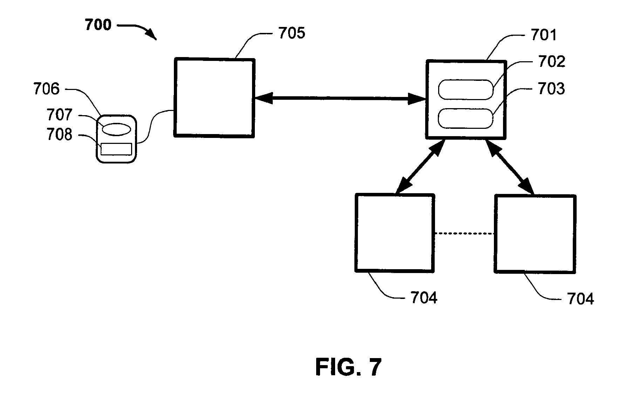

Referring to FIG. 7, the user identity verification system 700 comprises a server 701. The server 701 supports a web interface 702 via which the user registers with the user identity verification system. The server 701 has access to a database 703. The database 703 stores information including user identifiers and user account details. The database 703 also contains information regarding each registered user's account. The information includes the unique ID of the ID access keys issued to the registered user. As will be explained, the information may further comprise one or more "third party permanent codes" that allow the identity of the registered user to be verified by administrators or providers of third party websites. Therefore, the server 701 may further be in communication with the one or more third party websites or online services 704.

On the user's end, each user has access to a computer 705 to which an access reader 706 is connected. The computer 705 and the server 701 are in communication over a secure communications network. In this example the reader 706 is a RFID reader and writer, and communicates to the computer 705 via a USB connection. In an alternative embodiment, the access key can be a USB device and the reader can be a USB hub. The reader 706 is compliant with RFID standards, such as those of the International Organization for Standardisation.

The access reader 706 is loaded with firmware 707. The firmware 707 enables the read/write operations of the reader 706. The firmware 707 further includes an advanced encryption standard (AES) encryption system. Using the encryption system, the reader 706 can encrypt and decrypt data.

To take advantage of the user identity verification system, each user needs to have a valid identification (ID) access key (or access tag) 708. The key 708 can be a standards compliant RFID tag. It is preferably easily transportable. It may be, for example, a key fob, a token such as a coin, or a card. In the present embodiment, each key 708 further bears a unique serial number. The serial number is factory programmed. This serial number is encrypted and decrypted along with the RFID key. This serial number enables the reader 706 to verify the authenticity of the key 708.

In an alternative embodiment of an identity verification system, a valid identification (ID) access key 708. The access key 708 can be in the form of a USB device. It will be appreciated that many USB devices, such as storage devices are uniquely (or quasi uniquely) identifiable through reading a preconfigured or pre-stored serial number. The USB device is preferably easily transportable. It may be, for example, a key fob. In the present embodiment, each access key 708 is associated with a unique serial number. The serial number can be factory programmed. This serial number is preferably encrypted and decrypted when accessed. This serial number can also enable the access key reader 706 to verify the authenticity of the access key 708.

### User identity verification System-User registration

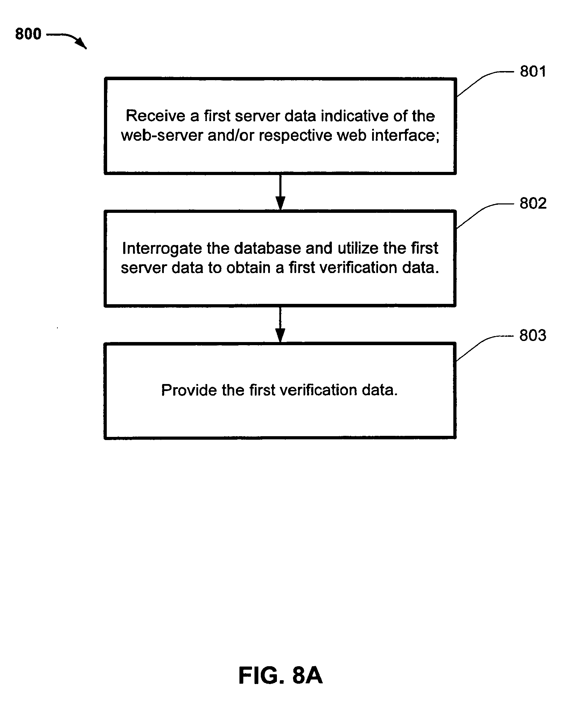

Referring to FIG. 8A, a method is shown for controlling access to one or more electronic services (as best shown in FIG 2A), wherein the one or more services are made available by a web-server via a web interface, and the user's access is provided by a client device coupled to the web-server. The method further comprising the steps of:
➢ receiving a first server data indicative of the web-server and/or respective web interface;801
➢ interrogating the database and utilizing the first server data to obtain a first verification data; 802
➢ providing the first verification data; 803, thereby the web-server, upon processing the first verification data, can verify the first user and enable verified access to the one or more services.

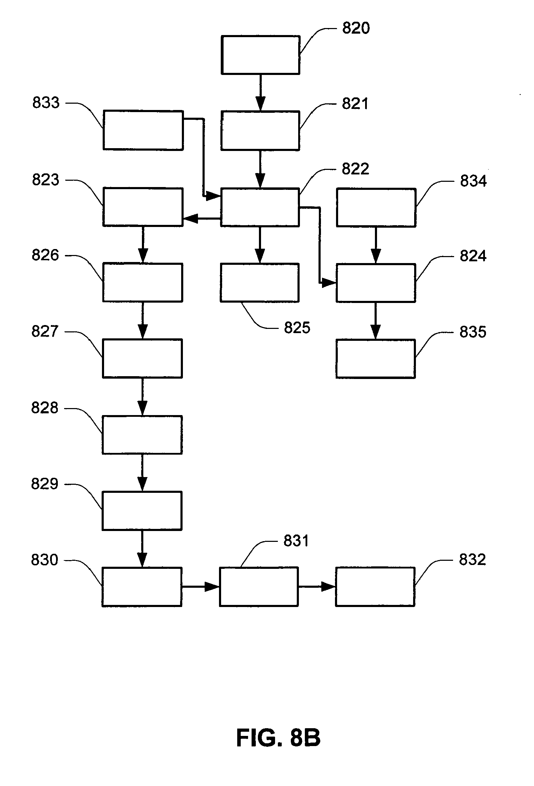

Referring to FIG. 8B, after a user has installed the hardware and software required for the user identity verification system 820, his or her computer will connect to the server 821. This connection may be automatically launched after the installation is complete, or may be made by the user at a later time. Upon connection to the server, the user is invited to create an account 822. To create an account, the user is asked to select a unique username and password combination. After the creation of an account 822, the user is prompted to take one of several actions. The user may elect to acquire an ID key for a new key 823, delete the ID key of an existing key (i.e. invalidating an existing key) 824, or place an existing key on the access reader 825.

After a user elects to acquire an ID key for a new key 823, the user is prompted to place an ID access key on the access reader 826, and then accept a download from the server 827. The download comprises a unique data string, the ID key. The ID key, along with the key's unique serial number, is encrypted by the reader 828. The encrypted data is then written to the key by the reader 829. The key is write-protected, and the data cannot be altered or erased. After the encryption and data writing processes are completed, a notification of the completion is sent to the server 830. The server then dispatches a message to advise the user that the operation is complete, and that the user can now log out 831. The message may further include information about how to use the ID key. The server further locks the user's account after the user logs out 832. A user who logs into a locked account and presents the corresponding ID key 833 has full access to the account. A user who logs into a locked account without presenting the corresponding ID key 834 can only delete an existing key.

Once a user chooses to delete an existing key 824, the server will remove the ID key assigned to that key, and other data associated with that key, from the database 835. The key bearing the removed ID key is no longer useful. A user may wish to delete an existing key if he or she loses the key, or no longer requires the key.

### Third Party Service Registration

A website owner or administrator, or the provider of an online service ("the third party") may enter into an affiliation or an agreement with a provider or administrator of the user identity verification system. The agreement allows the third party to offer its customers an enhanced identity verification routine.

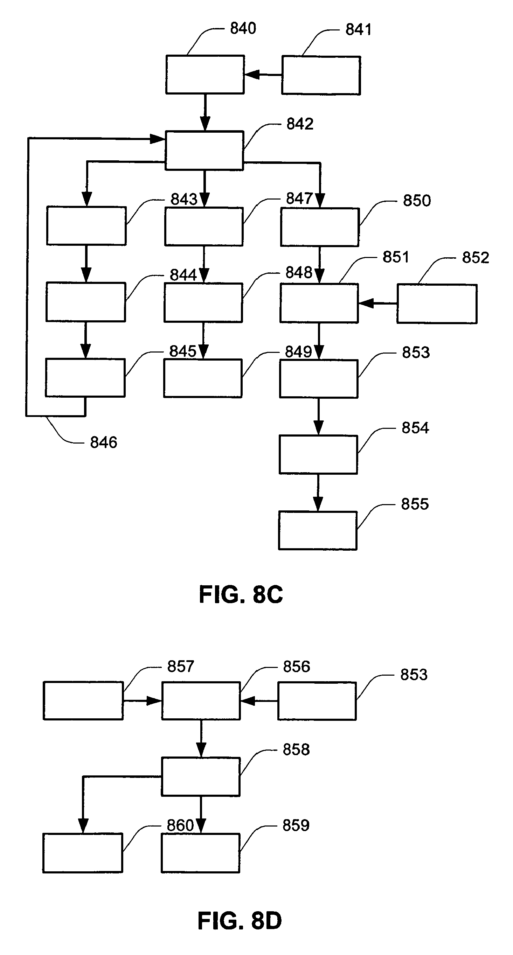

Referring to FIG. 8C, a third party offers its customers the choice to obtain a "verified ID" status 840. Obtaining a "verified ID" status means the third party can confirm a customer's identity via the identity verification system described above. The choice may be presented as a link on the third party website. No more steps relating to the confirmation system are performed if the user chooses not to obtain a "verified ID" status 841. Different scenarios are possible if the customer chooses to obtain a "verified ID" status by, for example, clicking "OK" or following a similar link 842.

In the first scenario, the customer is not a registered user of the identity verification system 843. The third party site or service directs the customer to instruction on how to become a registered user of the confirmation system 844. After completing the aforementioned user registration process 845, the customer may then return to the third party website and choose to obtain the "verified ID" status 846.

In the second scenario, the customer does not present an ID access key but is already a registered user of the identity verification system 847. In this case, the third party service or site may prompt the customer to place his or her ID key on the reader connected to the computer that is used 848. The third party registration process is interrupted if the customer does not have his or her ID key, or does not have access to a computer equipped with a reader 849.

In a further scenario, the customer is a registered user of the identity verification system, and has access to both the ID key and the access reader 850. The third party website then downloads a file containing a unique identification field, such as a cookie, to a temporary system cache on the user's computer 851. The cookie includes information that identifies (to the server 853) the third party website that issued it. In this example, the cache is a single first-in-first-out (FIFO) storage, and no more than one cookie is saved at a time. The presentation of the ID key on the reader launches a connection between the user's computer and the identity verification system's server 852. The previously downloaded cookie is then automatically uploaded to the server 853. The server issues a confirmation of the receipt of the cookie 854. At this confirmation, the cookie is deleted from the temporary cache 855.

Referring to FIG. 8D, from the received cookie 853, the server ascertains the address of the third party website 856. The server also ascertains the identity of the registered user (or third party website customer) from the unique identifier transmitted from the reader 857. Using this information, the server creates a permanent code 858. The permanent code is specific to that registered user. It is also specific to the third party website where the registered user is a customer. The permanent code is transferred by the server to the third party website 859. The permanent code is also recorded into the identity verification system server's database for its registered users 860. To the administrator or provider of the third party website, this permanent code also represents the registered user (i.e. the customer). The aforementioned process, depicted in FIG 8C and FIG. 8D, may be repeated several times, so that the same registered user may obtain "verified ID" status for different third party sites. It is not necessary to use a different ID key for each third party site.

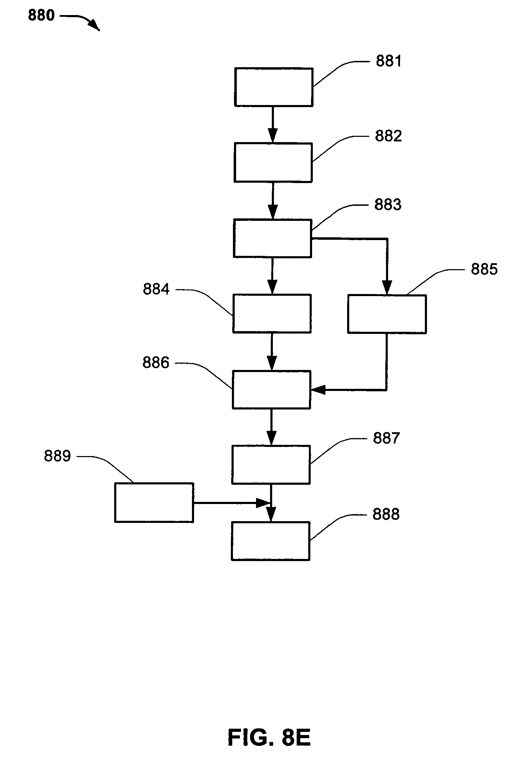

FIG. 8E depicts how a customer's identify can be verified on a third party website affiliated with the identity verification system 880. After a customer completes the third party registration process, to access the third party website the customer will present his or her ID key and obtain verification from the confirmation system. The user initiates a login request by presenting the ID key (for example placing an ID tag on the access reader) 881. The presentation causes the ID key's unique ID key and the user's internet protocol (IP) address to be transmitted to the identity verification system server 882. This transmission is a secure communication. For example, the transmitted data may be encrypted, or the transmission may be enabled through a secure channel.

Upon receiving a login request from a customer with "verified ID" status, the third party website submits the customer's IP address to the confirmation system server 883. The server matches the incoming IP address against the registered user database to confirm that the customer's ID key is "registered" to communicate at the IP address. Upon finding a match, the server locates a permanent code that corresponds to this IP address 884. Using the cookie information contained in the permanent code, the identity verification system server identifies the third party specific to the permanent code 885. The confirmation system server sends the located permanent code to the identified third party 886. The third party then matches the received permanent code against its own records to verify the identity of the customer 887. In this example, the third party takes an action to confirm or indicate the customer's verified status 888. For example, in the case that the third party provides a chat room or web-based email service, the third party places an image indicating a "verified" status beside the name of the customer whose identity has been identified. In some embodiments, the third party may further request a login name/password combination from the customer before allowing the customer to be logged in 889. In other embodiments the third party may provide options for users to ignore (or otherwise deal with differently) all communication from users without "verified" status.

### Encrypted Copying of a Registered User's Account

A key exchange encryption process can also be incorporated into the access control interface as described herein.

In an embodiment, a unique encryption key is created when a user registers a password protected account on the system server. Registered users are also allocated a unique system-assigned static ID number. A user may add other users as 'friends', which grants permission for those users to decrypt content encrypted by the first user. These permissions are based on the unique static ID number and hence continue to work even if a new ID access key is registered.

As long as the user verification requirement is satisfied, the user can enter his or her account information or authorization details. This includes building a list of other users who he or she wishes to add as a 'friend' (i.e. invite other users to communicate using a unique set of encryption keys). In some embodiments a user can send requests to obtain authorisation for communicating with other users, or respond to similar requests originating from other users. The entered information can be stored into the centralized or distributed database.

By way of example, when a user encrypts data, the user's ID access key is used to fetch the encryption key and static ID number from a system server. The encryption key can then be used to encrypt the data. The static ID number is also associated with the encrypted data. This static ID is represented in a non-encrypted format to identify the user who encrypted the data. When another user attempts to decrypt the encrypted content, the static ID of the encrypting user is obtained from the encrypted data and transferred to the system server. The decrypting user's static ID code is obtained from the server's user account records based on the decrypting user's ID Key. If the decrypting user's static ID is on the friends list of the encrypting user, the encryption key is returned and decryption is permitted. Preferably, the encryption key is fetched for every encryption and decryption action and is never stored in memory or on the local hardware. In this example, encryption and decryption requires a valid ID Key to be present at the user's PC. By way of example only, encrypting and decrypting can involve one or more of the following operations:
➢ Unencrypted files on a local client device can be dragged to a target and dropped, whereby the encrypted file is output to a predetermined or user-selected directory.
➢ Received encrypted files can be dragged to a target and dropped. The decrypted file is opened/run (if there is an available application) and the user is offered the opportunity to save the decrypted file to a user-selected location.
➢ Text typed into an application can be dragged to a target and dropped. The output is displayed in a predetermined window and is automatically placed onto the clipboard cache from where it can be pasted back into the original application.
➢ Encrypted text in a web page/e-mail or other application can be dragged to a target and dropped - the output is displayed in a predetermined window and is also placed onto a clipboard cache.

By way of example only, for encryption of data using the interface disclosed herein, the first verification data includes a first encryption key and a first identification data each indicative of the first user. The first user is enabled access to the one or more services for conveying input data encrypted with the first encryption key. An unencrypted form of the first identification data is also associated with the encrypted input data.

The interface enables the first user to drag and drop unencrypted input data, thereby to automatically encrypt and convey the input data. The input data and/or encrypted input data is cached for subsequent access by the first user.

By way of example only, for decryption of data using the interface disclosed herein, where the one or more services were accessed using encrypted input data, and the input data was encrypted with an input encryption key, wherein an unencrypted form of an input identification data is associated with the encrypted input data. In this example, the first user is enabled access to the one or more services for utilizing the input data. The first verification data includes a first identification data indicative of the first user. Wherein, if the database associates the first identification data with authorization, by a user identified by the input identification data, to decrypt the input data, then the control program provides the first verification data comprising an input decryption key suitable for decrypting the input data. Thereby enabling access to one or more services.

Preferably, the first verification data is obtained for each input data decryption operation. More preferably, the first user can drag and drop encrypted input data, thereby automatically decrypting the input data using the first encryption key.

It will be appreciated that for symmetric encryption algorithm, the first encryption key and a respective first decryption key are the same. Similarly, for asymmetric encryption algorithm, the first encryption key and a respective first decryption key are different.

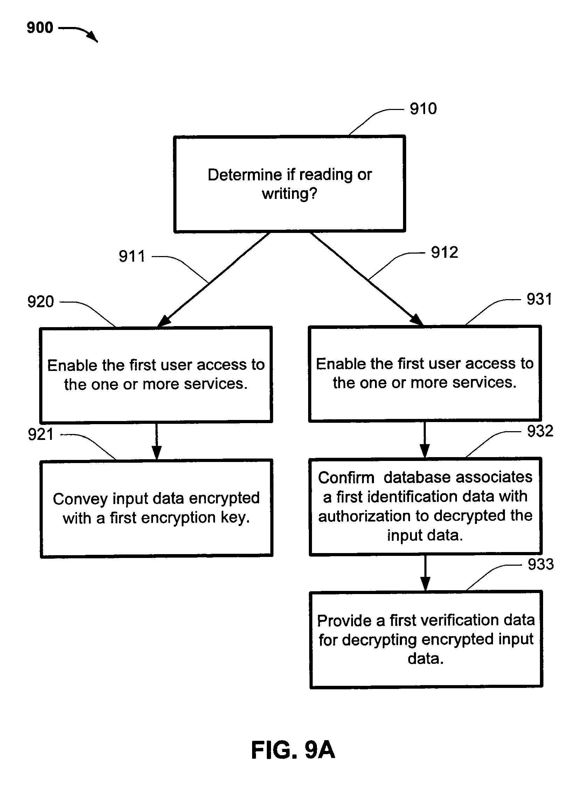

Referring to FIG. 9A, a method is shown for controlling access to one or more electronic services (as best shown in FIG 2A), wherein the one or more services are made available by a web-server via a web interface, and the user's access is provided by a client device coupled to the web-server. The method further comprising the steps of:
➢ Determining if reading or writing encrypted data; 910
➢ if writing data to the one or more electronic services 911, the first verification data includes a first encryption key and a first identification data each indicative of the first user, the method further comprising the steps of:
   a. enabling the first user access to the one or more services; 920
   b. conveying input data encrypted with the first encryption key, wherein an unencrypted form of the first identification data is associated with the encrypted input data; 921 and
➢ if reading data from the one or more electronic services 912, the one or more services were accessed using encrypted input data, wherein an unencrypted form of an input identification data is associated with the encrypted input data, the first verification data includes a first identification data indicative of the first user, the method further comprising the steps of:
   a. enabling the first user access to the one or more services; 931
   b. if the database associates the first identification data with authorization by a user identified by the input identification data to decrypted the input data 932, providing the first verification data comprising an input decryption key suitable for decrypting the encrypted input data, thereby to enable access to the one or more services 933.

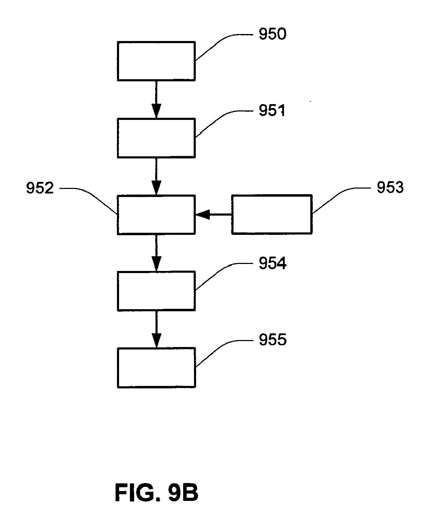

Referring to FIG. 9B, a registered user who has logged into his or her account with the identity verification system 950 can choose to download an encrypted copy of his or her account information 951. The encrypted copy does not contain the full account settings. In this example, any permanent codes that identify the user on third party sites will not be copied. The account settings instead include references to the database locations of the permanent codes. The encrypted copy is downloaded to a computer readable storage location of the user's choice 952.

The identity verification system allows its registered users to create new ID keys, for example replacement keys for lost ID keys. Upon a creation of a new ID key 953 (or 823), the registered user can upload the encrypted copy to the server 954. Doing so allows the server to assign the original account settings to the user's new ID key 955. This also prevents a user from having to create new memberships or customer accounts on the third party sites included in his or her profile.

It will be appreciated that user access interface and associate method have been disclosed. This can enable validating a user's online ID and encrypting and decrypting of data. In an embodiment, user access interface and associated method utilises: a uniquely identifiable ID Key in the form of a USB drive or RFID tag, a means of reading the ID Key (such as a USB slot or RFID reader), software, and an online server. It will be further appreciated that the software is a required component and must be running, with any necessary Firewall settings configured, for enabling validation of a user's online ID or encrypting/decrypting data.

The authentication process can be carried out in a separate channel that is parallel to and independent of the channel utilized by one or more accessible services. The use of a parallel authentication and accessible services channels allows modularity within the system. In some examples, the authentication methods may be modified while system components relating to delivery of an accessible service remain unchanged. In the above embodiments, an access-key and access readers have been used for the purpose of user authentication. It will be appreciated that other authentication methods may be used in other embodiments. For instance, the system server may identify the IP addresses of the user machines. User machines may also be identified using the hard disk identifiers or addresses. In other embodiments, biometrics such as a fingerprint may be used to authenticate users who have access to fingerprint readers such as a fingerprint scanner. It is further possible that the system server identifies, and the central database stores, the medial access control addresses of the network adapters such as wireless or Ethernet adapters, or the network cards associated with the users' machines. With the advent of global positioning system (GPS) identification chips, some embodiments may use GPS chips to authenticate users based on the user's location. It is envisioned that some embodiments may have the capability to authenticate users using more than one authentication or identification methods.

Some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In alternative embodiments, the one or more processors operate as a standalone device or may be connected, e.g., networked to other processor(s), in a networked deployment, the one or more processors may operate in the capacity of a server or a client machine in server-client network environment, or as a peer machine in a peer-to-peer or distributed network environment.

Thus, one embodiment of each of the methods described herein is in the form of a computer-readable carrier medium carrying a set of instructions, e.g. a computer program that is for execution on one or more processors.

Unless specifically stated otherwise, as apparent from the following discussions, it is appreciated that throughout the specification discussions utilizing terms such as "processing", "computing", "calculating", "determining" or the like, can refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken is included.

Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

A software application can comprise executable code for carrying out one or more predetermined operations on a computer (or processing platform). By way of example, a software application can comprise executable code - or instructions - that when executed by at least one processors, further utilises firmware of the computer to carry out the predetermined operations.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

Reference throughout this specification to "one embodiment" or "an embodiment" means that a particular feature, structure or characteristic described in connection with the embodiment is included in at least one embodiment. Thus, appearances of the phrases "in one embodiment" or "in an embodiment" in various places throughout this specification are not necessarily all referring to the same embodiment, but may refer to the same embodiment. Furthermore, the particular features, structures or characteristics may be combined in any suitable manner, as would be apparent to one of ordinary skill in the art from this disclosure, in one or more embodiments.

Similarly it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description. Although the invention has been described with reference to specific examples, it will be appreciated by those skilled in the art that the invention may be embodied in many other forms.

The reference to any prior art in this specification is not, and should not be taken as, an acknowledgment or any form of suggestion that that prior art forms part of the common general knowledge.

While the present invention has been disclosed with reference to particular details of construction, these should be understood as having been provided by way of example only.

## Claims

1. A computer program product stored on a computer usable medium, the computer program product adapted to provide a user access interface for a computer device, the computer device being adapted to receive access data indicative of a respective physical access-key, the computer device being coupleable to database having one or more records indicative of registered users, associated access keys and associated verification data; the computer program product comprising:
computer readable program means for receiving a first access data indicative of a first access key;
computer readable program means for, upon receiving the first access data, interrogating the database, thereby to obtain a first verification data; the first verification data being indicative of access verification for one or more accessible services associated with the first access data, the physical access key and a respective registered first user;
computer readable program means for utilizing the first verification data to enable administration of a user's access to the one or more services.

2. A computer program product according to claim 1, wherein the first access data is further indicative of an account name and a password of a registered user.

3. A computer program product according to claim 1 or claim 2, wherein the processor device communicates using an internet protocol, and wherein the first access data is further indicative of an internet protocol address associated with the computer device.

4. A computer program product according to any one of claims 1 to 3,
wherein the one or more services are made available by a web-server via a web interface, and the user's access is provided by a client device coupled to the web-server; the computer program product further comprising:
computer readable program means for receiving a first server data indicative of the web-server and/or respective web interface; computer readable program means for interrogating the database and utilizing the first server data to obtain the first verification data; computer readable program means for providing the first verification data; thereby the web-server, upon processing the first verification data, can verify the first user and enable verified access to the one or more services.

5. A computer program product according to claim 4, wherein the web-server makes the web interface available using an internet protocol and the client device has a client IP address, the web-server being adapted to submit the client IP address to the control program; the computer program product further comprising:
computer readable program means for confirming that the physical access-key had been registered for use at the provided client IP address, and providing the first verification data corresponding to the first access data and the client IP address.

6. A computer program product according to claim 4 or claim 5, wherein a second user accessing a web interface made available by the web-server receives a verification indicator, indicative of the first verification data, to thereby verify the first user had accessed the one or more services.

7. A computer program product according to any one of claims 4 to 6,
wherein the web-server makes the web interface available using an internet protocol and the client device has a client IP address, wherein when the web-server receives a request for verification the web interface submits the client IP address to the computer program product, the computer program product further comprising:
computer readable program means for matching the client IP address against the database and confirming the physical access-key is registered to communicate at the client IP address;
computer readable program means for, upon confirmation, obtaining the first verification data that corresponds to this IP address; computer readable program means for accessing cookie information associated with the first verification data;
computer readable program means for identifying a permanent code; and
computer readable program means for transmitting the identified permanent code to the web-server such that the web-server can match the permanent code against its own records to verify the identity of the first user.

8. A computer program product according to any one of claims 1 to 7, wherein the first verification data includes a first encryption key associated with the first user and a first identification data indicative of the first user; the computer program product further comprising:
computer readable program means for enabling the first user to access the one or more services for conveying input data encrypted with the first encryption key, wherein an unencrypted form of the first identification data is also associated with the encrypted input data.

9. A computer program product according to claim 8, wherein the interface enables the first user to drag and drop unencrypted input data, thereby to automatically encrypt and convey the input data.

10. A computer program product according to claim 8 or claim 9, wherein the input data and/or encrypted input data is cached for subsequent access by the first user.

11. The interface according to any one of claims 8 to 10, wherein the first encryption key and a respective first decryption key are different, and are thereby associated with use in an asymmetric encryption algorithm.

12. A computer program product according to any one of claims 1 to 7,
wherein the one or more services were accessed using encrypted input data, input data was encrypted with an input encryption key, wherein an unencrypted form of an input identification data is associated with the encrypted input data; the computer program product further comprising:
computer readable program means for enabling the first user to access the one or more services for utilizing the input data;
the first verification data including a first identification data indicative of the first user;
wherein, if the database associates the first identification data with authorization by a user identified by the input identification data to decrypt the input data, the first verification data comprises an input decryption key suitable for decrypting the input data; thereby to enable access to the one or more services.

13. A computer program product according to claim 12, wherein the first verification data is obtained for each input data decryption operation.

14. A computer program product according to claim 12 or claim 13, wherein the interface enables the first user to drag and drop encrypted input data, thereby automatically decrypting the input data using the first encryption key.

15. A method for controlling access to one or more electronic services in a computer system, said method comprising the steps of:
(a) receiving a first access data indicative of a respective first physical access-key;
(b) interrogating a database having one or more records indicative of registered users having associated access keys and associated verification data;
(c) obtaining a first verification data indicative of access verification for one or more accessible services associated with the first access data, the physical access key and a respective first registered user; and
(d) utilizing the first verification data to enable administration of a user's access to the one or more electronic services.
